# DEMANDE DE BREVET EUROPEEN

(11) **EP 3 984 850 A2**
(43) Date de publication de la demande: **20.04.2022**
(21) Numéro de dépôt: 21197465.4
(22) Date de dépôt: 17.09.2021
(51) Int. Cl.: B60W 40/08, B60W 60/00, B60W 50/00

(54) **PROCÉDÉ DE CONTRÔLE DE LA DÉLÉGATION DE CONDUITE D'UN VÉHICULE AUTOMOBILE À CONDUITE AUTONOME**

(30) Priorité: 29.09.2020 FR 2009926
(71) Demandeur: Renault s.a.s, 92100 Boulogne Billancourt (FR)
(72) Inventeur: CHAZAL, Yann, 78084 Guyancourt (FR); HEIN, Andreas, 91190 Gif-sur-Yvette (FR)
(74) Mandataire: Renault Group

(57) **Abrégé**

[Procédé de surveillance du comportement d'un conducteur d'un véhicule automobile, ledit véhicule comprenant un système de commande automatique adapté pour générer des signaux de pilotage autonome d'actionneurs du véhicule en phases de délégation de conduite et des organes de commande humaine adaptés pour générer des signaux de pilotage manuel desdits actionneurs en mode de fonctionnement manuel du véhicule, ledit procédé comprenant des étapes de:
- enregistrer des données en phases de délégation de conduite, comprenant des données relatives à un délai de réponse du conducteur à une consigne lui enjoignant de reprendre le contrôle du véhicule en mode de fonctionnement manuel et/ou des données relatives à une scène environnante perçue par le véhicule au moment d'une action, effectuée par le conducteur, de reprise de contrôle du véhicule en mode de fonctionnement manuel en l'absence de ladite consigne,
- exploiter les données enregistrées pour détecter un comportement non souhaité du conducteur.

## Description

[La présente invention concerne le domaine de la conduite autonome d'un véhicule automobile sur une voie de circulation. Elle concerne plus particulièrement un procédé de surveillance du comportement d'un conducteur d'un véhicule automobile à conduite autonome lors de phase de délégation de conduite du véhicule.

Dans le cadre du développement récent des véhicules autonomes de niveaux d'automatisation 3 et plus, tels que définis par l'échelle SAE (acronyme pour «Society of Automotive Engineers »), le conducteur est censé n'effectuer aucune des tâches opérationnelles de conduite, telles que l'accélération, le freinage ou la manipulation du volant, qui sont ainsi déléguées au système de commande en mode autonome du véhicule, qui assure le contrôle complet du véhicule. Le conducteur humain est donc autorisé à ne pas tenir le volant pour réaliser d'autres tâches en parallèle, comme par exemple regarder un film sur un écran de son véhicule. Ainsi, à partir du niveau 3 d'automatisation, la surveillance de l'environnement du véhicule incombe au système de commande du véhicule et non plus au conducteur humain. Cela implique des fonctions avancées de détection d'objets (routes, lignes, véhicules) et d'événements. Cependant, pour le niveau SAE 3 le conducteur doit encore rester attentif à la route et doit être capable de reprendre le contrôle immédiatement en cas de besoin.

Dans ce cadre, la conduite peut être totalement déléguée, mais seulement dans certaines conditions environnementales et de trafic prédéfinies, sur autoroute, par exemple. Ainsi, la délégation de conduite réside ici dans la capacité du véhicule à gérer de façon automatisée, dans ces conditions, toute la conduite du véhicule. Le système doit être capable de reconnaître ses limites d'utilisation, c'est-à-dire le moment où les conditions de circulation ne sont plus compatibles avec ses fonctions. Dans ce cas-là, le véhicule invite le conducteur à reprendre la conduite, par exemple au moyen d'une alerte visuelle et/ou sonore envoyée plusieurs secondes à l'avance. Ainsi, en pratique, seules des portions des trajets pourront être réalisées ainsi à haut niveau de conduite autonome et le conducteur enchainera donc des phases de conduite manuelle, où il récupère la charge de la conduite du véhicule, et des phases de délégation de conduite complète.

On connait déjà des systèmes de surveillance de la conduite de véhicules, qui sont couramment déployés par les opérateurs de flottes de véhicules et qui sont par exemple capables de relever des infractions (par exemple une vitesse excessive), des comportements à risque du conducteur (tel que l'usage du téléphone portable par exemple), des écarts vis-à-vis des trajets attendus, etc. L'exploitation de cette surveillance permet ainsi de faire progresser le comportement des conducteurs, en particulier par des mécanismes d'incitation, d'éducation, ou de sanction à destination des conducteurs. Un tel système de surveillance est par exemple décrit dans la publication « Portable System for Monitoring and Controlling Driver Behavior and the Use of a Mobile Phone While Driving » par Khandakar et al.

Cependant, dans le contexte exposé ci-dessus de l'émergence de la délégation de conduite complète du véhicule par un conducteur à un système de commande du véhicule, il importe non seulement de continuer à surveiller le comportement du conducteur pendant des phases de conduite manuelle, mais également d'introduire une surveillance spécifique qui soit dédiée aux phases de délégation de conduite complète.

En effet, ces phases de délégation de conduite complète du véhicule, typiquement pour des niveaux d'automatisation de niveaux 3 et au-delà dans l'échelle SAE, imposent l'adoption de nouveaux comportements pour le conducteur lorsqu'il se retrouve déchargé des tâches de conduite manuelle du véhicule, de façon à permettre d'exploiter au mieux les performances du système de commande du véhicule. Ainsi, plus ces nouveaux comportements pourront être adoptés, plus les bénéfices attendus de la délégation de conduite et, en particulier, la sécurité, deviendront effectifs et, partant, plus le temps laissé au conducteur pourra être valorisé par d'éventuelles autres tâches. En revanche, ces nouveaux comportements à adopter pourraient ne pas être intuitifs pour tous les conducteurs, voire contestés par ceux restant attachés à la conduite manuelle, en s'opposant ainsi à l'intérêt de l'opérateur de flotte.

On connaît déjà des systèmes permettant de surveiller le comportement d'un conducteur en phase de conduite autonome du véhicule, notamment par l'exemple qu'en donne le document US10545499 B2. Ce document décrit plus particulièrement l'utilisation d'un système de surveillance du conducteur, pendant la phase de conduite autonome, afin de garantir la stimulation du conducteur.

La problématique soulevée dans ce document est donc limitée à la surveillance et au maintien de la vigilance du conducteur. La solution apportée repose sur l'évaluation de la vigilance du conducteur par rapport à un niveau de vigilance cible, sur la base de données d'état du conducteur, présentes et passées.

Il existe toutefois un besoin de soumettre le conducteur à une surveillance plus étroite, notamment pour fiabiliser le déploiement de phases de délégation de conduite complète du véhicule, en particulier dans un contexte d'exploitation par un opérateur d'une flotte de véhicules à conduite autonome, dans laquelle des phases de délégation de conduite du véhicule sont normalement attendues.

A cette fin, l'invention concerne un procédé de surveillance du comportement d'un conducteur d'un véhicule automobile, dans lequel ledit véhicule comprend un système de commande automatique adapté pour générer des signaux de pilotage autonome d'actionneurs du véhicule en fonction de données de navigation du véhicule et de données de perception d'une scène environnante du véhicule, pendant des phases de délégation de conduite du véhicule au système de commande automatique, et des organes de commande humaine adaptés pour générer des signaux de pilotage manuel desdits actionneurs du véhicule pendant des phases de conduite en mode de fonctionnement manuel du véhicule, ledit procédé étant caractérisé en ce qu'il comprend des étapes de :
- enregistrer des données caractéristiques de l'activité du conducteur, acquises en phases de délégation de conduite du véhicule, parmi au moins des données relatives à un délai de réponse du conducteur à une consigne émise par une interface homme-machine du véhicule lui enjoignant de reprendre le contrôle du véhicule en mode de fonctionnement manuel, et/ou des données relatives à une scène environnante perçue par le véhicule au moment d'une action, effectuée par le conducteur, de reprise de contrôle du véhicule en mode de fonctionnement manuel en l'absence de ladite consigne,
- exploiter les données enregistrées de façon à détecter et caractériser au moins un comportement non souhaité du conducteur dans le cadre de la délégation de conduite du véhicule.

Avantageusement, le procédé peut comprendre une étape d'enregistrer en outre des données relatives à un délai de réponse du conducteur à une consigne émise par l'interface homme-machine du véhicule, d'activation d'une phase de délégation de conduite au système de commande automatique du véhicule.

Avantageusement, le système de commande automatique du véhicule étant adapté à détecter un dysfonctionnement d'au moins un organe de perception du véhicule utilisé pour l'acquisition des données de perception de la scène environnante du véhicule, et à émettre, à travers l'interface homme-machine du véhicule, une consigne d'entretien dudit au moins un organe de perception à destination du conducteur, ledit procédé peut comprendre une étape d'enregistrer en outre des données relatives à un délai entre l'émission de ladite consigne et une action dudit conducteur mettant fin au dysfonctionnement détecté.

Avantageusement, ledit procédé peut comprendre une étape d'enregistrer des données relatives à un signalement lié aux conditions routières, effectué par le conducteur à destination d'un module de navigation du véhicule adapté pour fournir les données de navigation utilisées par le système de commande automatique du véhicule, et des données relatives à une scène environnante perçue par le véhicule simultanément audit signalement.

Avantageusement, l'exploitation des données enregistrées comprend une comparaison entre le signalement effectué par le conducteur et la scène perçue par le véhicule simultanément audit signalement et une validation ou non dudit signalement en fonction des résultats de ladite comparaison.

Avantageusement, ledit procédé peut comprendre une étape d'enregistrer des données fournies par un module de détection de l'hypovigilance du conducteur au cours des phases de délégation de conduite du véhicule.

L'invention concerne également un système de surveillance du comportement d'un conducteur d'un véhicule automobile comprenant au moins un module de navigation adapté pour fournir des données de navigation du véhicule, un module de détection adapté pour recevoir des données de perception d'une scène environnante du véhicule à partir d'au moins un organe de perception équipant le véhicule, un système de commande automatique adapté pour générer des signaux de pilotage autonome d'actionneurs du véhicule en fonction des données de navigation du véhicule et des données de perception de la scène environnante du véhicule, pendant des phases de délégation de conduite du véhicule au système de commande automatique, et des organes de commande humaine adaptés pour générer des signaux de pilotage manuel desdits actionneurs du véhicule pendant des phases de conduite en mode de fonctionnement manuel du véhicule, ledit système de surveillance étant caractérisé en ce qu'il comprend au moins un module d'enregistrement de données intégré au système de commande automatique, ledit module d'enregistrement de données étant adapté pour mettre en œuvre les étapes du procédé tel que décrit ci-dessus.

D'autres caractéristiques et avantages de l'invention ressortiront clairement de la description qui en est faite ci-après, à titre indicatif et nullement limitatif, en référence à la figure unique annexée :

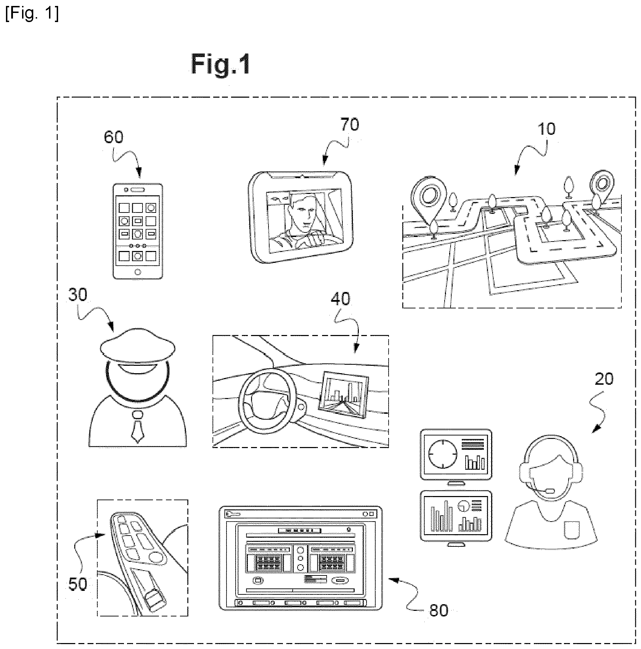

[Fig. 1] représente un diagramme de contexte d'un système de surveillance conforme à l'invention.

L'invention s'applique donc à un véhicule automobile autonome de niveau d'automatisation supérieur à 3 selon l'échelle SAE. Un tel véhicule intègre un système de commande automatique, adapté pour générer des signaux de pilotage autonome d'actionneurs du véhicule, en fonction de données de navigation du véhicule et de données de perception d'une scène environnante du véhicule.

Pour ce faire le système de commande automatique héberge des modules de mise en œuvre du fonctionnement autonome du véhicule, en particulier un module de navigation et un module de détection adapté pour recevoir des données de perception d'une scène environnante du véhicule. Le module de navigation fournit les données de navigation à partir de cartes numériques 10 précises de l'environnement routier du véhicule, lesquelles sont par exemple reçues à travers une connexion de réseau du véhicule, établie entre le module de navigation et un serveur, par exemple le serveur d'un opérateur de flotte de véhicules 20 en charge de la gestion de la zone de circulation du véhicule concerné. Au cours des trajets, le système de commande automatique du véhicule reçoit régulièrement des cartes via la connexion de réseau du véhicule, suffisamment détaillées pour les besoins de la conduite autonome.

Ces cartes 10 contiennent des données sur le contexte de l'environnement routier du véhicule, par exemple concernant le type de routes, le nombre de voies, ainsi que la réglementation en vigueur, ayant trait par exemple à la limitation de la vitesse etc.

Le module de détection fournit les données de perception de la scène de conduite environnante à partir d'un ou plusieurs organes de perception, par exemple au moins une caméra équipant le véhicule conçue pour détecter l'environnement du véhicule.

Ainsi, la conduite autonome du véhicule peut être mise en œuvre au moyen des données de navigation du véhicule, fournissant notamment la localisation du véhicule, et des données de perception de la scène de conduite, à partir desquelles le système de commande automatique du véhicule est adapté pour générer les signaux de pilotage autonome des actionneurs du véhicule.

Le véhicule est également prévu pour fonctionner en mode manuel sous le contrôle d'un conducteur de véhicule 30, en d'autres termes il peut également être conduit par un être humain, à travers des organes de commande humaine du véhicule adaptés pour recevoir des consignes du conducteur et pour générer des signaux de pilotage manuel des actionneurs du véhicule pendant des phases de conduite en mode de fonctionnement manuel du véhicule (conduite active).

Le véhicule est également équipé d'une interface homme machine 40, permettant au conducteur de visualiser la carte de navigation courante du véhicule. L'interface homme machine comprend par exemple un écran tactile de commande, à travers lequel le conducteur 30 dispose en continu d'informations liées au fonctionnement du véhicule et avec lesquelles il peut interagir. Le conducteur peut par exemple être invité à signaler des anomalies pour mettre à jour les informations de la carte qu'il visualise sur son interface homme machine.

En outre, lorsque les conditions sont réunies, cette interface homme machine 40 peut être utilisée pour permettre d'alerter le conducteur 30 du véhicule de la possibilité d'activer le mode de conduite autonome du véhicule. Le conducteur peut décider de le faire en actionnant un bouton dédié à cet effet prévu par exemple sur la console centrale 50 du véhicule. L'action sur ce bouton active le mode de conduite autonome et partant, déclenche une phase de délégation de conduite du véhicule au système de commande automatique du véhicule. Cependant, à tout moment après le déclenchement de cette phase de délégation de conduite, le conducteur peut choisir de désactiver le mode de conduite autonome, par exemple par toute action sur les actionneurs de conduite (volant, pédales, bouton) et reprendre ainsi le contrôle manuel du véhicule.

Dans le contexte d'application de l'invention à l'exploitation d'une flotte de véhicules opérée par un opérateur de flotte, le conducteur peut également recevoir des missions, comportant des itinéraires élaborés par son opérateur de flotte 20 compatibles au mieux avec la conduite autonome, par exemple au moyen d'un smartphone 60 intégrant une application dédiée à cet effet, se connectant sur le serveur de l'opérateur de flotte.

Le véhicule peut de plus comporter un module 70 de détection de l'hypovigilance du conducteur, dans un but de sécurité, classiquement utilisé pour garantir que l'attention du conducteur est compatible avec l'activité de conduite du véhicule automobile. Un tel module est conçu pour détecter de façon connue en soi, plusieurs comportements d'hypovigilance, tels que la distraction visuelle, l'engagement du conducteur dans une tâche secondaire, des phases de micro-sommeil et/ou de somnolence.

Le véhicule comporte également un enregistreur de données 80, intégré au système de commande automatique du véhicule, pour la mise en œuvre d'un procédé de surveillance du comportement du conducteur, en particulier dans les phases de délégation de conduite du véhicule.

Ainsi, l'enregistreur est conçu pour enregistrer des données caractéristiques de l'activité du conducteur, acquises en phases de délégation de conduite du véhicule, aux fins de détecter et caractériser des comportements non souhaités du conducteur, notamment dans la phase de délégation de conduite du véhicule.

Un comportement non souhaité que l'on cherche à détecter concerne le fait pour le conducteur d'ignorer volontairement, pendant une durée plus ou moins longue, une consigne d'activation du mode de conduite autonome du véhicule qui lui est présentée, par exemple via l'interface homme-machine du véhicule. Aussi, l'enregistreur de données 80 est conçu pour enregistrer des données relatives au délai de réponse du conducteur à cette consigne émise par l'interface homme-machine du véhicule, soit le délai entre l'instant où la consigne d'activation de la conduite autonome est affichée et l'instant où le conducteur active la phase de délégation de conduite du véhicule au système de commande automatique, par appui sur le bouton dédié à cet effet présent sur la console centrale 50 du véhicule. L'exploitation de ces données de l'enregistreur va permettre de déterminer ce délai de réponse et, par comparaison par exemple à un seuil prédéfini, de déterminer si le comportement du conducteur est approprié ou non dans cette situation par rapport à un comportement normalement attendu.

Un autre comportement non souhaité que l'on cherche à détecter concerne le fait pour le conducteur d'ignorer volontairement, pendant une durée plus ou moins longue, une consigne de reprise en main du véhicule tandis que le mode autonome est activé. Aussi, l'enregistreur de données 80 est conçu pour enregistrer des données relatives au délai de réponse du conducteur à une telle consigne émise par l'interface homme-machine du véhicule, lui enjoignant de reprendre le contrôle de son véhicule en mode de fonctionnement manuel, soit le délai entre l'instant où la consigne de reprise en main du véhicule en mode de fonctionnement manuel est affiché et l'instant où le conducteur agit effectivement en ce sens. Comme précédemment, la détermination de ce délai de réponse va permettre de caractériser si le comportement du conducteur est approprié ou non dans cette situation par rapport à un comportement normalement attendu.

Un autre comportement non souhaité que l'on cherche à détecter concerne le fait pour le conducteur de repasser du mode autonome au mode de fonctionnement manuel du véhicule, alors que la situation ne le justifie pas, en particulier en l'absence de toute consigne de reprise en main du véhicule émise par l'interface homme-machine du véhicule. Aussi, l'enregistreur de données 80 est conçu pour enregistrer des données relatives à une scène environnante perçue par le véhicule au moment d'une action, effectuée par le conducteur, de reprise de contrôle du véhicule en mode de fonctionnement manuel alors qu'aucune consigne pour ce faire n'a été émise par l'interface homme-machine du véhicule. Dans une telle situation, l'exploitation de ces données de l'enregistreur va permettre d'analyser a posteriori la scène perçue par le véhicule, au moment de la reprise en main, pour vérifier sa pertinence et ainsi permettre de caractériser si le comportement du conducteur était approprié ou non dans cette situation.

Un autre comportement non souhaité que l'on cherche à détecter concerne le fait pour le conducteur de sciemment négliger des gestes basiques d'entretien des organes de perception de son véhicule autonome, comme typiquement le nettoyage des optiques des caméras équipant le véhicule. Les dysfonctionnements provoqués sur la ou les caméras utilisées pour l'acquisition des données de perception de la scène environnante du véhicule sont diagnostiqués par le système de commande automatique du véhicule. Ainsi, le système de commande automatique du véhicule est conçu pour détecter un tel dysfonctionnement et pour émettre, à travers l'interface homme-machine du véhicule, une consigne d'entretien des caméras. Aussi, l'enregistreur de données est conçu pour enregistrer des données relatives à un délai entre l'émission d'une telle consigne et une détection de fin de dysfonctionnement, soit le délai entre l'instant où la consigne d'entretien est affichée et l'instant où le conducteur agit effectivement pour remettre en état de fonctionnement les caméras. Dans une telle situation, l'exploitation des données de l'enregistreur va permettre de déterminer a posteriori le délai avant remise en état, pour ce type de dysfonctionnement dont la résolution repose sur le soin du conducteur et ainsi déterminer si le comportement du conducteur fut appropriée ou non dans cette situation, par rapport à un comportement normalement attendu.

L'interface homme-machine du véhicule peut être conçue pour permettre au conducteur d'effectuer un signalement se rapportant aux conditions routières, de façon à mettre à jour les données de navigation utilisées par le système de commande automatique du véhicule. Le signalement est par exemple effectué via une action réalisé par le conducteur sur l'écran tactile de commande de l'interface homme-machine. Aussi, un autre comportement non souhaité que l'on cherche à détecter concerne le fait pour le conducteur de signaler volontairement des informations erronées (incidents, travaux, ou autres alertes), qui seraient intégrées aux cartes fournissant les données de navigation utilisées pour le mode de conduite autonome, de façon à provoquer une sortie des conditions requises à son activation. Aussi, l'enregistreur de données 80 est conçu pour enregistrer des données relatives à un tel signalement lié aux conditions routières, effectué par le conducteur et des données relatives à la scène environnante perçue par le véhicule simultanément à ce signalement. Dans une telle situation, l'exploitation des données de l'enregistreur va permettre de comparer le signalement avec la scène perçue simultanément par le véhicule et ainsi permettre de valider ou non le signalement effectué par le conducteur en fonction des résultats de la comparaison.

Un intérêt des phases de délégation de conduite du véhicule, au-delà de contribuer à la sécurité, visent à permettre au conducteur de se consacrer à d'autres tâches attendues hors des phases de conduite active, ce qui signifie pour le conducteur de faire confiance au système de commande automatique du véhicule. Dans ce contexte, un autre comportement non souhaité que l'on cherche à détecter concerne le fait pour le conducteur de continuer à surveiller la route, alors que le mode de conduite autonome est activé, au détriment de sa disponibilité pour les autres tâches attendues. Le module 70 de détection de l'hypovigilance du conducteur est habituellement utilisé dans d'autres contextes pour s'assurer de la capacité du conducteur à assumer la tâche de conduite. Son usage est ici détourné pour s'assurer au contraire de l'hypovigilance effective du conducteur pendant une phase de délégation de conduite, en particulier pour s'assurer de l'engagement du conducteur dans une tâche secondaire. Aussi, l'enregistreur de données 80 est également conçu pour enregistrer des données fournies par le module 70 de détection de l'hypovigilance au cours des phases de délégation de conduite du véhicule. L'exploitation des données de l'enregistreur va alors permettre de déterminer à posteriori l'effectivité d'un comportement d'hypovigilance du conducteur pendant la phase de délégation de conduite, en particulier l'engagement du conducteur dans une tâche secondaire.

## Revendications

1. [Procédé de surveillance du comportement d'un conducteur d'un véhicule automobile, dans lequel ledit véhicule comprend un système de commande automatique adapté pour générer des signaux de pilotage autonome d'actionneurs du véhicule en fonction de données de navigation du véhicule et de données de perception d'une scène environnante du véhicule, pendant des phases de délégation de conduite du véhicule au système de commande automatique, et des organes de commande humaine adaptés pour générer des signaux de pilotage manuel desdits actionneurs du véhicule pendant des phases de conduite en mode de fonctionnement manuel du véhicule, ledit procédé étant **caractérisé en ce qu'**il comprend des étapes de :
- enregistrer des données caractéristiques de l'activité du conducteur, acquises en phases de délégation de conduite du véhicule, parmi au moins des données relatives à un délai de réponse du conducteur à une consigne émise par une interface homme-machine (40) du véhicule lui enjoignant de reprendre le contrôle du véhicule en mode de fonctionnement manuel, et/ou des données relatives à une scène environnante perçue par le véhicule au moment d'une action, effectuée par le conducteur, de reprise de contrôle du véhicule en mode de fonctionnement manuel en l'absence de ladite consigne,
- exploiter les données enregistrées de façon à détecter et caractériser au moins un comportement non souhaité du conducteur dans le cadre de la délégation de conduite du véhicule.

2. Procédé selon la revendication 1, **caractérisé en ce qu'**il comprend une étape d'enregistrer en outre des données relatives à un délai de réponse du conducteur à une consigne émise par l'interface homme-machine du véhicule, d'activation d'une phase de délégation de conduite au système de commande automatique du véhicule.

3. Procédé selon la revendication 1 ou 2, dans lequel le système de commande automatique du véhicule est adapté à détecter un dysfonctionnement d'au moins un organe de perception du véhicule utilisé pour l'acquisition des données de perception de la scène environnante du véhicule, et à émettre, à travers l'interface homme-machine du véhicule, une consigne d'entretien dudit au moins un organe de perception à destination du conducteur, ledit procédé étant **caractérisé en ce qu'**il comprend une étape d'enregistrer en outre des données relatives à un délai entre l'émission de ladite consigne et une action dudit conducteur mettant fin au dysfonctionnement détecté.

4. Procédé selon l'une quelconque des revendications précédentes, **caractérisé en ce qu'**il comprend une étape d'enregistrer des données relatives à un signalement lié aux conditions routières, effectué par le conducteur à destination d'un module de navigation du véhicule adapté pour fournir les données de navigation utilisées par le système de commande automatique du véhicule, et des données relatives à une scène environnante perçue par le véhicule simultanément audit signalement.

5. Procédé selon la revendication 4, **caractérisé en ce que** l'exploitation des données enregistrées comprend une comparaison entre le signalement effectué par le conducteur et la scène perçue par le véhicule simultanément audit signalement et une validation ou non dudit signalement en fonction des résultats de ladite comparaison.

6. Procédé selon l'une quelconque des revendications précédentes, **caractérisé en ce qu'**il comprend une étape d'enregistrer des données fournies par un module de détection de l'hypovigilance du conducteur au cours des phases de délégation de conduite du véhicule.

7. Système de surveillance du comportement d'un conducteur d'un véhicule automobile comprenant au moins un module de navigation adapté pour fournir des données de navigation du véhicule, un module de détection adapté pour recevoir des données de perception d'une scène environnante du véhicule à partir d'au moins un organe de perception équipant le véhicule, un système de commande automatique adapté pour générer des signaux de pilotage autonome d'actionneurs du véhicule en fonction des données de navigation du véhicule et des données de perception de la scène environnante du véhicule, pendant des phases de délégation de conduite du véhicule au système de commande automatique, et des organes de commande humaine adaptés pour générer des signaux de pilotage manuel desdits actionneurs du véhicule pendant des phases de conduite en mode de fonctionnement manuel du véhicule, ledit système de surveillance étant **caractérisé en ce qu'**il comprend au moins un module d'enregistrement de données (80) intégré au système de commande automatique, ledit module d'enregistrement de données étant adapté pour mettre en œuvre les étapes du procédé selon l'une quelconque des revendications précédentes.
